# NEUE EUROPÄISCHE PATENTSCHRIFT

(11) **EP 1 048 527 B2**
(45) Veröffentlichungstag und Bekanntmachung des Hinweises auf die Entscheidung über den Einspruch: **21.03.2007**
(45) Hinweis auf die Patenterteilung: 14.05.2003
(21) Anmeldenummer: 00106668.7
(22) Anmeldetag: 29.03.2000
(51) Int. Cl.: B60R 11/02

(54) **Für ein Kraftfahrzeug bestimmtes Einbaugerät**
Built-in equipment for a motor car
Appareil incorporable dans un véhicule à moteur

(30) Priorität: 30.04.1999 DE 19919970; 06.08.1999 DE 19936725
(43) Veröffentlichungstag der Anmeldung: 02.11.2000
(73) Patentinhaber: SIEMENS AKTIENGESELLSCHAFT, 80333 München (DE)
(72) Erfinder: Scheuer, Wilfried, 35075 Gladenbach (DE); Lauth, Stephan, 35614 Asslar (DE)

(56) Entgegenhaltungen:
- EP-A- 0 899 889
- EP-A- 0 928 720
- EP-B- 0 804 351
- WO-A-97/19833
- DE-A- 19 548 394
- DE-A- 19 631 591
- DE-A- 19 734 988
- DE-C- 4 430 531
- FR-A- 2 623 044

## Beschreibung

Die Erfindung betrifft ein für ein Kraftfahrzeug bestimmtes Einbaugerät, insbesondere Funktelefon, mit einem Bedienelement zur Funktionsbetätigung des Einbaugerätes und mit einer zum Einsetzen einer Speicherkarte in eine Leseeinheit des Einbaugerätes ausgeführten Einführöffnung, wobei die Einführöffnung an einer dem Benutzer zugewandten Vorderseite des Einbaugeräts angeordnet und einer mittels das Bedienelement tragenden Abdeckung verschließbar ist. Ein derartiges Einbaugerät ist zum Beispiel aus der EP 0 899 889 A bekannt.

Einbaugeräte der genannten Art werden bei modernen Kraftfahrzeugen in zu diesem Zweck bereits weitgehend vorbereitete und standardisierte Einschubfächer eingesetzt. Neben den serienmäßig vorhandenen Einbaugeräten können auch aus einem umfangreichen Angebot individuelle Einbaugeräte nachgerüstet werden.

Wesentliche benutzerspezifische Daten sind auf der Speicherkarte enthalten. Nach dem Einsetzen der Speicherkarte in die Leseeinheit sind die auf ihr enthaltenen Daten von dem Einbaugerät abrufbar.

Nachteilig wirkt sich bei den Einbaugeräten der genannten Art aus, dass die Einführöffnung zum Einsetzen der Speicherkarte in einem rückwärtigen Abschnitt des Gehäuses angeordnet ist. Dadurch ist diese zwar gut geschützt, jedoch muss zum Austausch der Speicherkarte das gesamte Einbaugerät aus seiner Befestigung herausgenommen werden. Es ist bereits daran gedacht worden, die Einführöffnung in einem vorderen, dem Benutzer zugewandten Abschnitt des Gehäuses anzuordnen, um so einen einfacheren Austausch der Speicherkarte zu ermöglichen. Dies ist jedoch aufgrund der Vielzahl der Bedien- und Anzeigeelemente des Einbaugerätes und des damit verbundenen geringen Bauraumes nicht möglich, siehe zum Beispiel die DE 196 315 91 A.

Der Erfindung liegt das Problem zugrunde, ein Einbaugerät der eingangs genannten Art so zu gestalten, dass das Einsetzen der Speicherkarte in die Leseeinheit des Einbaugerätes besonders einfach ist, wobei eine möglichst hohe Funktionssicherheit bei möglichst niedrigen Herstellungskosten gewährleistet sein soll.

Dieses Problem wird erfindungsgemäß durch ein Einbaugerät mit den Merkmalen des Anspruch gelöst.

Hierdurch ist es möglich, die Einführöffnung an einer dem Benutzer zugewandten Vorderseite des Einbaugerätes anzuordnen. Nach dem Einführen oder der Entnahme der Speicherkarte wird die Einführöffnung mittels der Abdeckung verschlossen. Die Abdeckung dient dabei zugleich als Träger des Bedienelementes, so dass der insgesamt für Bedienelemente zur Verfügung stehende Platz nicht eingeschränkt wird. Das Einführen bzw. Herausnehmen der Speicherkarte ist dabei durch die leichte Zugänglichkeit an der Vorderseite des Einbaugerätes erheblich vereinfacht, so dass die Speicherkarte insbesondere auch zum Schutz gegen unerwünschte Benutzung mühelos mitgeführt werden kann. Ferner können entsprechende Einbaugeräte beispielsweise bei Mietfahrzeugen mit ständig wechselnden Benutzern eingesetzt werden, wobei lediglich deren individuelle Speicherkarte in die Einführöffnung eingesetzt wird und anschließend alle Daten sofort abrufbar sind. Zugleich ist die derart abgedeckte Einführöffnung gegenüber Umwelteinflüssen weitgehend geschützt. Das Bedienelement kann dabei beliebige elektrische Schaltelemente oder Tasten und zusätzlich auch Anzeigeeinheiten aufweisen.

Die Abdeckung kann über eine Kontaktierung mit dem Einbaugerät elektrisch verbunden sein. Erfindungsgemäß ist das Bedienelement zur Übertragung der mechanischen Betätigungskraft auf einen an dem Einbaugerät angeordneten Schaltpunkt ausgeführt.

Hierdurch werden von dem auf der Abdeckung angeordneten Bedienelement lediglich Druckkräfte übertragen, während der elektrische Kontaktpunkt an dem Einbaugerät fest angeordnet ist. Eine elektrische Kontaktierung zwischen der Abdeckung und dem Einbaugerät kann daher entfallen und dadurch mögliche Störungen verhindert und die Betriebssicherheit erhöht werden. Hierbei sind sowohl Dreh- als auch Druckkräfte übertragbar, wobei die Abdeckung beispielsweise auch im wesentlichen transparent oder als Lichtleiter ausgeführt sein kann.

Die Übertragung der Betätigungskraft kann mittels eines Stößels oder eines Kolbens erfolgen. Eine besonders einfache Weiterbildung der Erfindung ist jedoch dann gegeben, wenn die Abdeckung als eine zur Übertragung der Betätigungskraft schwenkbare Wippe ausgeführt ist.

Hierdurch lässt sich eine einfache Kraftübertragung erreichen, die für eine zuverlässige Kraftübertragung mit wenigen Bauelementen auskommt. Hierzu können die Abdeckung und das Bedienelement insbesondere auch als ein integrales Bauteil ausgeführt sein. Zugleich ist ein Verklemmen bei einer nachlässigen Positionierung des Bedienelementes weitgehend ausgeschlossen, so dass die Betriebssicherheit weiter erhöht werden kann.

Eine besonders vorteilhafte Ausführungsform der Erfindung ist dadurch erreicht, dass die Abdeckung mittels einermanuell betätigbaren Rastverbindung in ihrer Position fixiert ist.

Hierdurch kann die Abdeckung einerseits schnell und mühelos in der Gebrauchsposition fixiert werden, andererseits ist zum Entfernen der Abdeckung lediglich eine Betätigung der Rastverbindung erforderlich. Die Rastverbindung kann hierzu beispielsweise einen verschiebbaren oder gegen die Rückstellkraft einer Feder beweglichen Riegel aufweisen und mittels einer Druck- oder Schiebebetätigung auslösbar sein.

Eine andere besonders vorteilhafte Weiterbildung der Erfindung ist dadurch gegeben, dass die Abdeckung eine gegenüber der zu verschließenden Einführöffnung nur geringfügig größere Fläche aufweist.

Hierdurch lässt sich die Abdeckung problemlos anordnen und kann durch die kompakten Abmessungen zugleich mühelos mitgeführt werden. Zugleich wird der übrige Platz nur unwesentlich eingeschränkt, so dass bei der Herstellung im wesentlichen bereits vorhandene Konstruktionen mit lediglich geringfügigen Anpassungen wiederverwendet werden können.

Eine besonders günstige Weiterbildung der Erfindung ist dadurch gegeben, dass das Einbaugerät eine die Positionierung der Abdeckung erleichternde Führung aufweist, wobei die Abdeckung eine Ausnehmung und das Einbaugerät einen in diese eingreifenden Vorsprung aufweist.

Die Handhabung der Abdeckung wird dadurch erheblich erleichtert. Insbesondere kann die Führung eine Abschrägung oder Fase aufweisen, mit der die Abdeckung in die korrekte Position geleitet wird. Die Abdeckung kann zur Fixierung lediglich einseitig gegen das Einbaugerät angelegt und anschließend durch eine Schwenkbewegung, bei der die Führung zugleich ein mögliches Abgleiten verhindert, fixiert werden.

Die Speicherkarte kann individuelle Daten des Benutzers enthalten. Eine besonders günstige Weiterbildung der Erfindung ist auch dann erreicht, wenn die Speicherkarte eine zur Inbetriebnahme erforderliche Codierung hat.

Hierdurch kann eine Benutzung des Einbaugerätes durch Unbefugte wirkungsvoll verhindert werden, indem der Betrieb des Gerätes ohne die entsprechenden auf der Speicherkarte enthaltenen Daten ausgeschlossen ist. Die Speicherkarte dient somit zugleich dem passiven Diebstahlschutz, so dass auf zusätzliche Schutzmaßnahmen weitgehend verzichtet werden kann.

Daneben ist es auch vorteilhaft, wenn die Speicherkarte zur Inbetriebnahme des Fahrzeugs erforderlich ist und somit die Funktion eines Fahrzeugschlüssels übernimmt. Gleichzeitig kann die Karte z.B. auch als Türschlüssel zum Öffnen der Fahrzeugtüren dienen.

Dabei ist eine besonders günstige Ausführungsform der Erfindung auch dann erreicht, wenn die Speicherkarte eine Netzkarte eines Funktelefonnetzes ist. Durch den erfindungsgemäßen schnellen Zugriff auf die Speicherkarte kann diese somit in verschiedenen Geräten genutzt werden. Beispielsweise kann mit der Netzkarte während der Fahrt das Einbaugerät als Autotelefon betrieben werden. Nach der Fahrt kann die Netzkarte in ein Mobiltelefon eingesetzt werden, so dass eine nahezu ununterbrochene Erreichbarkeit und eine flexible Verwendung der Netzkarte ermöglicht wird.

Eine andere besonders vorteilhafte Ausführungsform der Erfindung ist auch dadurch gegeben, dass das Einbaugerät zusätzlich eine Schreibeinheit zum Abspeichern von Daten auf der Speicherkarte aufweist. Hierdurch können während des Betriebes des Einbaugerätes auftretende Datenänderungen auf der Speicherkarte abgelegt werden, um so zu einem späteren Zeitpunkt beispielsweise auch bei Verwendung der Speicherkarte in einem anderen Gerät, abrufbar zu sein.

Die Abdeckung kann grundsätzlich vollständig entnehmbar oder auch beispielsweise mittels eines Gelenkes beweglich mit dem Einbaugerät verbunden sein. Weitere Ausführungsformen mitverschiebbaren Abdekkungen sind ebenso denkbar wie großflächige Abdekkungen, die hierzu beispielsweise die gesamte Vorderseite des Einbaugerätes abdecken. Ferner kann eine durch die Abdeckung abschirmbare Lichtquelle die Positionierung erleichtern und zugleich auf das Fehlen der Speicherkarte bzw. der Abdeckung hindeuten.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt in einer perspektivischen Darstellung in
- Fig. 1: eine Vorderansicht eines erfindungsgemäßen Einbaugerätes und einer Abdeckung,
- Fig. 2: eine rückwärtige Ansicht der in Figur 1 gezeigten Abdeckung.

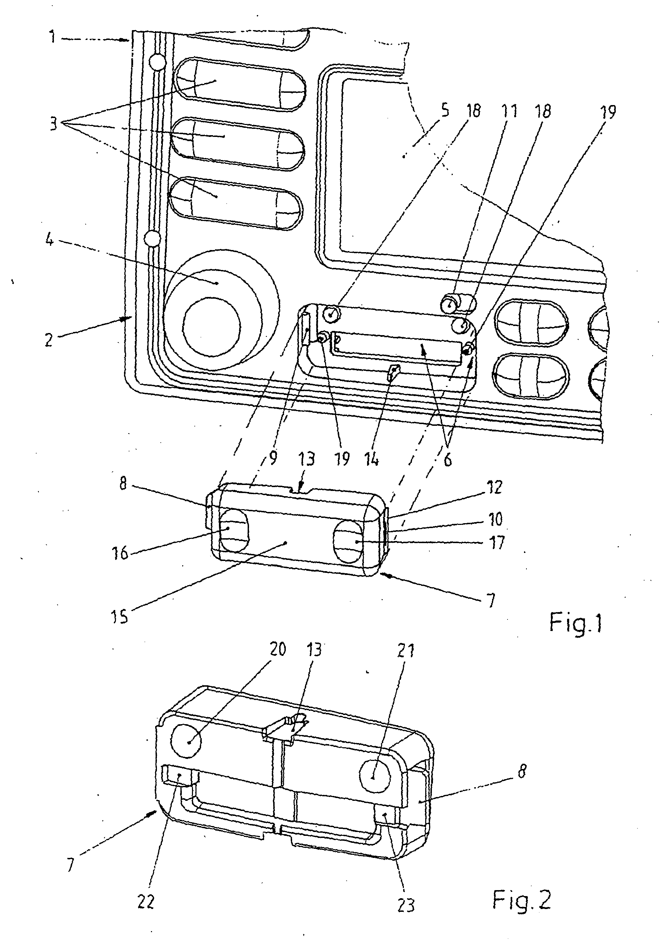

Figur 1 zeigt ein als Autoradio ausgebildetes Einbaugerät 1 in einer perspektivischen Vorderansicht. Das Einbaugerät 1 hat eine Vorderseite 2 mit mehreren Betätigungselementen 3, sowie einen Drehschalter 4 und ein Display 5. Das Einbaugerät 1 weist weiterhin eine Einführöffnung 6 zum Einführen einer nicht dargestellten Speicherkarte auf. Diese Einführöffnung 6 ist mittels einer Abdeckung 7 verschließbar. Die Abdekkung 7 hat hierzu einen Vorsprung 8, der zum Fixieren der Abdeckung 7 zunächst eine Rastnase 9 des Einbaugerätes 1 hintergreift. Anschließend wird eine dem Vorsprung 8 gegenüberliegende Rastfläche 10 fixiert. Hierzu greift ein mit einem Betätigungselement 11 verbundenes, bewegliches, nicht dargestelltes Rastmittel in die Rastfläche 10 ein. Die Rastfläche 10 und das nicht dargestellte Rastmittel bilden zusammen eine Rastverbindung 12. Zur Erleichterung des Fixiervorganges dient eine als Schwenkfläche ausgeführte Ausnehmung 13 der Abdeckung 7, in die ein keilförmiger Vorsprung 14 des Einbaugerätes 1 eingreift und dadurch ein Abgleiten der Abdeckung 7 verhindert. Die Abdeckung 7 dient zugleich als Träger eines Bedienelementes 15, welches zwei Drucktasten 16, 17 aufweist. Die Drucktasten 16, 17 ermöglichen eine Übertragung der manuell auf das Bedienelement 15 aufgebrachten Betätigungskraft auf jeweils einen Schaltpunkt 18 des Einbaugerätes 1. Die Abdeckung 7 wirkt dabei als Tastenwippe, die um den Berühungsbereich zwischen vorderem Ende des keilförmigen Vorsprungs 14 und hinterem Ende (mit halbkreisförmiger Ausnehmung, Figur 2) der Ausnehmung 13 schwenkbar ist.

Die elektrische Kontaktierung erfolgt daher im Inneren des Einbaugerätes 1, so dass eine Funktionsstörung, beispielsweise ein Kurzschluss innerhalb der Abdeckung 7 durch eine unsachgemäße Handhabung, verhindert werden kann. Zwei Kontaktstifte 19 ermöglichen ferner auch die unmittelbare elektrische Kontaktierung der Abdeckung 7 mit dem Einbaugerät 1.

Figur 2 zeigt eine perspektivische und gegenüber Figur 1 vergrößerte Darstellung der Rückseite der in Figur 1 gezeigten Abdeckung 7. Zu erkennen ist der Vorsprung 8 und die Ausnehmung 13, welche zur Fixierung der Abdeckung 7 eine die Schwenkbewegung erleichternde Formgebung aufweist. Weiterhin hat die Abdeckung 7 zwei Bohrungen 20, 21, in die jeweils der in Figur 1 gezeigte Schaltpunkt 18 im Betriebszustand eingreift und so eine Übertragung der. Betätigungskraft ermöglicht. Die Abdeckung 7 weist weiterhin zwei Kontaktflächen 22, 23 für die in Figur 1 dargestellten Kontaktstifte 19 auf. Durch die derart erfolgte elektrische Kontaktierung ist es beispielsweise auch möglich, die Abdeckung 7 mit einer individuellen Codierung zu versehen, um die Inbetriebnahme des Einbaugerätes 1 ohne die zugehörige Abdeckung 7 zu verhindern und so einen passiven Diebstahlschutz des Einbaugerätes 1 zu erreichen.

## Patentansprüche

1. Ein für ein Kraftfahrzeug bestimmtes Einbaugerät, insbesondere Funktelefon, mit einem Bedienelement zur Funktionsbetätigung des Einbaugerätes und mit einer zum Einsetzen einer Speicherkarte in eine Leseeinheit des Einbaugerätes ausgeführten Einführöffnung, wobei die Einführöffnung (6) an einer dem Benutzer zugewandten Vorderseite (2) des Einbaugerätes (1) angeordnet und mittels einer das Bedienelement (15) tragenden Abdeckung (7) verschließbar ist, **dadurch gekennzeichnet, dass** das Bedienelement (15) zur Übertragung der mechanischen Betätigungskraft auf einen an dem Einbaugerät (1) angeordneten Schaltpunkt (18) ausgeführt ist.

2. Einbaugerät nach Anspruch 1, **dadurch gekennzeichnet, dass** die Abdeckung (7) als eine zur Übertragung der Betätigungskraft schwenkbare Wippe ausgeführt ist.

3. Einbaugerät nach einem der vorhergehenden Ansprüche, **dadurch gekennzeichnet, dass** die Abdeckung (7) mittels einer manuell betätigbaren Rastverbindung (12) in ihrer Position fixiert ist.

4. Einbaugerät nach einem der vorhergehenden Ansprüche, **dadurch gekennzeichnet, dass** die Abdeckung (7) eine gegenüber der zu verschließenden Einführöffnung (6) nur geringfügig größere Fläche aufweist.

5. Einbaugerät nach einem der vorhergehenden Ansprüche, **dadurch gekennzeichnet, dass** das Einbaugerät (1) eine die Positionierung der Abdeckung (7) erleichternde Führung aufweist, wobei die Abdeckung (7) eine Ausnehmung (13) und das Einbaugerät (1) einen in diese eingreifenden Vorsprung (14) aufweist.

6. Einbaugerät nach einem der vorhergehenden Ansprüche, **dadurch gekennzeichnet, dass** die Speicherkarte eine zur Inbetriebnahme erforderliche Codierung hat.

7. Einbaugerät nach einem der vorhergehenden Ansprüche, **dadurch gekennzeichnet, dass** die Speicherkarte eine Netzkarte eines Funktelefonnetzes ist.

8. Einbaugerät nach einem der vorhergehenden Ansprüche, **dadurch gekennzeichnet, dass** das Einbaugerät (1) zusätzlich eine Schreibeinheit zum Abspeichern von Daten auf der Speicherkarte aufweist.

## Claims

1. Built-in appliance, in particular a radio telephone, intended for a motor vehicle, with an operating element for actuating the function of the built-in appliance and with an introduction orifice designed for the insertion of a storage card into a reading unit of the built-in appliance, in that the introduction orifice (6) is arranged on a front side (2) of the built-in appliance (1), said front side facing the user, and is capable of being closed by means of a cover (7) carrying the operating element (15) **characterized in that** the operating element (15) is designed for transmitting the mechanical actuating force to a switching point (18) arranged on the built-in appliance (1).

2. Built-in appliance according to claim 1, **characterized in that** the cover (7) is designed as a rocker pivotable for the purpose of transmitting the actuating force.

3. Built-in appliance according to one of the preceding claims, **characterized in that** the cover (7) is fixed in its position by means of a manually actuable catch connection (12).

4. Built-in appliance according to one of the preceding claims, **characterized in that** the cover (7) has an area only slightly larger than that of the introduction orifice (6) to be closed.

5. Built-in appliance according to one of the preceding claims, **characterized in that** appliance (1) has a guide making it easier to position the cover (7), the cover (7) having a recess (13) and the built-in appliance (1) having a projection (14) engaging into the latter.

6. Built-in appliance according to one of the preceding claims, **characterized in that** the storage card has a coding necessary for the putting into operation.

7. Built-in appliance according to one of the preceding claims, **characterized in that** the storage card is a network card of a radio telephone network.

8. Built-in appliance according to one of the preceding claims, **characterized in that** the built-in appliance (1) additionally has a writing unit for storing data on the storage card.

## Revendications

1. Appareil encastré destiné à un véhicule automobile, notamment radiotéléphone, comportant un élément de commande pour l'actionnement de fonctions de l'appareil encastré et un orifice d'introduction conçu pour l'insertion d'une carte mémoire dans une unité de lecture de l'appareil encastré, l'orifice d'introduction (6) étant disposée sur une face avant (2) de l'appareil encastré (1) orientée vers l'utilisateur et pouvant être fermé au moyen d'un couvercle (7) supportant l'élément de commande (15), **caractérisé en ce que** l'élément de commande (15) est conçu pour la transmission de la force mécanique d'actionnement à un point de commutation (18) disposé sur l'appareil encastré (1).

2. Appareil encastré selon la revendication 1, **caractérisé en ce que** le couvercle (7) est conçu comme une bascule pouvant pivoter pour la transmission de la force d'actionnement.

3. Appareil encastré selon une des revendications précédentes, **caractérisé en ce que** le couvercle (7) est fixé dans sa position au moyen d'une liaison par encliquetage (12) actionnable manuellement.

4. Appareil encastré selon une des revendications précédentes, **caractérisé en ce que** le couvercle (7) présente une surface seulement légèrement plus importante par rapport à l'orifice d'introduction (6) à fermer.

5. Appareil encastré selon une des revendications précédentes, **caractérisé en ce que** l'appareil encastré (1) présente un guide facilitant le positionnement du couvercle (7), le couvercle (7) présentant un évidement (13) et l'appareil encastré (1) une saillie (14) s'encliquetant dans celui-ci.

6. Appareil encastré selon une des revendications précédentes, **caractérisé en ce que** la carte mémoire faisant partie de l'appareil encastré a un codage indispensable pour la mise en route.

7. Appareil encastré selon une des revendications précédentes, **caractérisé en ce que** la carte mémoire est une carte de réseau d'un réseau radiotéléphonique.

8. Appareil encastré selon une des revendications précédentes, **caractérisé en ce que** l'appareil encastré (1) présente en supplément une unité d'écriture pour l'enregistrement de données sur la carte mémoire.
